# EUROPÄISCHE PATENTANMELDUNG

(11) **EP 1 145 926 A2**
(43) Veröffentlichungstag der Anmeldung: **17.10.2001**
(21) Anmeldenummer: 01108444.9
(22) Anmeldetag: 04.04.2001
(51) Int. Cl.: B60T 8/50, B60T 13/68

(54) **Ventilanordnung für Druckluftbremsanlagen**

(30) Priorität: 13.04.2000 DE 10018400
(71) Anmelder: Haldex Brake Products GmbH, 69123 Heidelberg (DE)
(72) Erfinder: Schell, Günter, 69181 Leimen (DE)
(74) Vertreter: Patentanwälte Rehberg + Hüppe

(57) **Zusammenfassung**

Bei einer Ventilanordnung (1) für Druckluftbremsanlagen, mit einem Gehäuse (2), an dem ein Anschluß (3) für die Zuleitung von Druckluft in Form eines Signals oder eines Vorrats und ein Anschluß für eine zu einem Verbraucher führende Leitung vorgesehen sind, sind in oder an dem Gehäuse (2) ein elektrisch ansteuerbares Magnetventil als Einlaßventil (6) und ein elektrisch ansteuerbares Magnetventil als Auslaßventil (8) vorgesehen. In oder an dem Gehäuse (2) sind zumindest ein weiteres, gleiches elektrisch ansteuerbares Magnetventil als Einlaßventil (6) und/oder zumindest ein weiteres, gleiches elektrisch ansteuerbares Magnetventil als Auslaßventil (8) vorgesehen. Die Magnetventile sind jeweils parallel zueinander angeordnet. Mehrfach angeordnete gleiche Magnetventile (6 bzw. 8) sind je nach Steuerphilosophie wahlweise einzeln bzw. für große Durchflußmengen gemeinsam steuerbar.

## Beschreibung

Die Erfindung betrifft eine Ventilanordnung für Druckluftbremsanlagen, mit einem Gehäuse, an dem ein Anschluß für die Zuleitung von Druckluft in Form eines Signals oder eines Vorrats und ein Anschluß für eine zu einem Verbraucher führende Leitung vorgesehen sind, wobei in oder an dem Gehäuse ein elektrisch ansteuerbares Magnetventil als Einlaßventil und ein elektrisch ansteuerbares Magnetventil als Auslaßventil vorgesehen sind. Derartige Ventilanordnungen weisen in der Regel ein gemeinsames Gehäuse auf, in welchem einzelne Ventile angeordnet oder verwirklicht sind. Diese einzelnen Ventile oder Ventilelemente können in dem Gehäuse angeordnet oder auch an dem Gehäuse angeflanscht oder sonstwie angebracht sein, wobei zweckmäßig auch die einzelnen Leitungsverbindungen zwischen den Ventilen in dem Gehäuse vorgesehen sind. Die Ventilanordnung läßt zahlreiche Verwendungen und Anpassungen zu. Sie kann insbesondere in Verbindung mit einem Relaisventil, aber auch in durchsteuernder Bauart verwirklicht werden. Der Anschluß für die Zuleitung von Druckluft kann von einem Bremsdruckgeber, beispielsweise einem Bremsventil, betätigt werden, so daß die Druckluft in Form eines Signales an dem Gehäuse der Ventilanordnung ansteht. Es ist aber auch möglich, Druckluft aus einem Vorratsbehälter an dieser Stelle anzuschließen und die Druckluft immer oder gesteuert anstehen zu lassen. Von dem Gehäuse der Ventilanordnung führt mindestens eine Leitung zu einem Verbraucher, der beispielsweise als Bremszylinder ausgebildet sein kann. In dem Gehäuse der Ventilanordnung ist ein Einlaßventil untergebracht, welches als Magnetventil ausgebildet ist, also elektrisch ansteuerbar ist. Ebenso ist ein zweites elektrisch ansteuerbares Magnetventil vorgesehen, welches als Auslaßventil fungiert, also eine eigene Entlüftung hat oder bedient. Das Einlaßventil dient zur Belüftung. Das Auslaßventil dient zur Entlüftung einer nachgeordneten Bremskammer.

Eine Ventilanordnung der eingangs beschriebenen Art ist aus der EP 0 307 579 B1 oder auch der DE 196 26 288 C2 bekannt. Die Ventilanordnung weist ein gemeinsames Gehäuse auf, in welchem ein elektrisch ansteuerbares Magnetventil als Einlaßventil und ein elektrisch ansteuerbares Magnetventil als Auslaßventil in Reihe angeordnet sind, wobei die Magnetventile auch in umgekehrter Reihenfolge in Reihe angeordnet sein können. Die beiden Magnetventile sind einem Relaisventil vorgeschaltet, welches einerseits mit einem Druckluftvorrat in Verbindung steht und andererseits Verbindung zu einem Verbraucher, insbesondere dem Bremszylinder, hat. Die Ventilanordnung kann in entsprechender Anpassung entweder auf dem Zugfahrzeug oder auch auf dem Anhänger eingesetzt werden. Die beiden Magnetventile dienen nicht nur der Be- und Entlüftung des Verbrauchers, sondern es wird zusätzlich eine dritte Stellung, nämlich eine Druckhaltestellung, verwirklicht, in der der zum Relaisventil gesteuerte Druck weder erhöht, noch erniedrigt wird. Das als Einlaßventil fungierende Magnetventil ist so ausgebildet, daß es in der nicht erregten Stellung Durchgang hat, während es in der erregten Stellung den Durchgang sperrt. Das als Auslaßventil fungierende Magnetventil besitzt in der nicht erregten Stellung Durchgang zu dem Verbraucher, während es in der erregten Stellung eine Entlüftung des Verbrauchers bewirkt. Da die beiden Magnetventile jeweils zwei Stellungen ermöglichen, ergeben sich vier Schaltstellungen, wobei von der Funktion jedoch nur drei Stellungen benötigt werden. Zur Stromeinsparung wird die Schaltstellung nicht benutzt, in der beide Magnetventile gleichzeitig erregt wären. Für einen schnellen Druckaufbau bzw. -abbau ist es erforderlich, die Magnetventile mit einem relativ großen Durchgangsquerschnitt zu versehen, der in der Schließstellung durch einen entsprechenden Ventilkörper abzusperren ist. Damit erhöht sich bei einer großquerschnittigen Bauweise solcher Magnetventile auch deren Masse, insbesondere die Masse des Kerns. Der Kern arbeitet aber wiederum als Ventilkörper mit einem in der Regel aus elastischem Material bestehenden Dichtsitz zusammen. Dieses elastische Material besitzt nur eine begrenzte Lebensdauer, die nur eine begrenzte Schalthäufigkeit zuläßt. Durch die vergrößerte Bauweise ergibt sich auch die Vergrößerung der Spule jedes Magnetventils, die wiederum die Ursache für eine gesteigerte Erwärmung bei entsprechendem Betrieb sein kann. Relativ große Durchlaßquerschnitte sind jedoch nicht für alle Betriebszustände optimal. Die bei weitem überwiegende Anzahl der Betriebszustände liegt in einem Teilbremsbereich, in dem an sich große Durchlaßquerschnitte nicht benötigt werden. Werden solche Magnetventile jedoch in Verbindung mit einer ABS-Steuerung eingesetzt, kommt es in erster Linie auf eine schnelle Be- und Entlüftung an, so daß dieser Anwendungsfall wiederum für die Verwendung großer Durchlaßquerschnitte spricht. Ein großer Auslaßquerschnitt beispielsweise erbringt innerhalb einer ABS-Steuerung zwar vorteilhaft die Möglichkeit, den Bremsdruck schnell zu erniedrigen. Ein etwa gleich großer Einlaßquerschnitt jedoch birgt die Gefahr in sich, daß die Wiederbelüftung zu schnell erfolgt, so daß sie wiederum eine Entlüftung auslöst, wodurch die Schalthäufigkeit der Magnetventile ungünstig vergrößert wird. Bekannte Magnetventile in ihrer konstruktiven Ausführungsform lassen ohnehin nur eine begrenzte Anzahl von Schaltungen zu, die - je nach Anwendungsfall - kleiner sein kann, als es der Gesamtlebensdauer eines Fahrzeuges entspricht. Dies gilt insbesondere dann, wenn man eine vielleicht von 10 auf 15 Jahre gesteigerte Lebensdauer eines Fahrzeuges berücksichtigt. Die Gesamtzahl der Schaltungen solcher Magnetventile kann bei einer solchen Lebensdauer eine Größenordnung von 80 bis 100 Millionen Schaltvorgänge erreichen. Dabei tritt ein erheblicher Verschleiß an den Magnetventilen auf, insbesondere im Bereich der Führung des Kerns und der Abdichtung im Bereich der Sitzfläche.

Aus der DE 198 42 453 A1 ist ein Hydraulikbremsregelsystem zur Anwendung in einem Fahrzeug bekannt. Für vier Radbremsen, die je einen Verbraucher darstellen, sind in einem Regelventil eine Mehrzahl von Ventilen vorgesehen. Bei Normalbremsungen ist auch hier pro Verbraucher ein Einlaßventil und ein Durchlaßventil in Reihe dem Verbraucher vorgeschaltet. Das Einlaßventil hat in nicht-erregtem Zustand Durchgang und nimmt in erregtem Zustand eine Sperrspellung ein. Das Durchlaßventil ist ebenso ausgebildet. Außerdem ist mit dem Verbraucher ein weiteres Ventil direkt verbunden, welches zum Zwecke der Druckabsenkung im Verbraucher angesteuert wird. Für eine Drucksteuerung des Verbrauchers unter Blockierbedingungen ist ein weiteres Einlaßventil vorgesehen. Diesem Regelventil ist eine Flußregelvorrichtung vorgeschaltet, die in parallelen Zweigen zwei elektrisch ansteuerbare Magnetventile umfasst. Dem einen Magnetventil ist ein Druckreduzierventil und eine Blende nachgeordnet, so daß hiermit unter Blokkierbedingungen eine reduzierte Durchflußmenge alternativ zu einer nicht-reduzierten Durchflußmenge über den anderen Zweig mit dem anderen Magnetventil aussteuerbar ist. Die alternativ bereitgestellten Durchflußmengen gelangen über die jeweiligen in Reihe nachgeordneten Ventile des Regelventils zum jeweiligen Verbraucher.

Um den aufgezeigten Problemen wenigstens teilweise zu begegnen, ist es aus der DE 41 03 694 A1 bekannt, anstelle der beiden Magnetventile ein einziges proportional arbeitendes Magnetventil einzusetzen. Dieses Magnetventil führt die Be- und Entlüftung entsprechend der jeweils eingesteuerten Stromstärke proportional durch. Die Anwendung des Proportionalventiles zielt darauf ab, die Anzahl der Magnetventile und damit die Anzahl der Elektromagnete zu verringern, ebenso die Masse und das Gewicht und letztlich auch den Stromverbrauch. Die Anwendung dieses Proportionalventiles erfordert jedoch wiederum die gesonderte Ausbildung eines Bremsdruckgebers.

Der Erfindung liegt die Aufgabe zugrunde, eine Ventilanordnung der eingangs beschriebenen Art zu schaffen, die bei entsprechender Steuerung eine vergleichsweise größere Lebensdauer hat.

Erfindungsgemäß wird dies bei einer Ventilanordnung der eingangs beschriebenen Art dadurch erreicht, daß in oder an dem Gehäuse zumindest ein weiteres, gleiches, elektrisch ansteuerbares Magnetventil als Einlaßventil und/oder zumindest ein weiteres, gleiches, elektrisch ansteuerbares Magnetventil als Auslaßventil vorgesehen sind, daß die Magnetventile jeweils parallel zueinander angeordnet sind, und daß mehrfach angeordnete gleiche Magnetventile je nach Steuerphilosophie wahlweise einzeln bzw. für große Durchflußmengen gemeinsam steuerbar sind.

Die Erfindung geht von dem Gedanken aus, zunächst auf der Verwendung von einem Magnetventil als Einlaßventil und einem Magnetventil als Auslaßventil auszugehen und mindestens eines dieser Magnetventile zu verdoppeln. Unter dem Begriff verdoppeln wird die kleinste Einheit verstanden, in der die Erfindung anwendbar ist. Entsprechendes gilt für eine Verdreifachung, Vervierfachung usw.. Die Verdopplung bzw. Vermehrfachung kann im Bereich des Einlaßventiles und/oder des Auslaßventiles angewendet werden, und zwar je nach Anwendungsfall. Aus der Verdopplung bzw. Vermehrfachung der Magnetventile ergibt sich eine Reihe von teilweise unerwarteten Vorteilen: So reduziert schon die alternierende Betriebsweise zweier herkömmlicher Einlaßventile die Anzahl der Schaltungen pro Ventil auf die Hälfte, so daß insgesamt die Lebensdauer der Ventilanordnung erhöht und damit in eine Größenordnung gebracht wird, die der Gesamtlebensdauer eines Fahrzeuges in etwa entspricht. Mit der Verdopplung der Anzahl der Magnetventile, also beispielsweise der Anordnung von zwei parallelgeschalteten Einlaßventilen, eröffnet sich sinnvollerweise die weitere Möglichkeit, den Durchlaßquerschnitt des betreffenden einzelnen Magnetventils zu verkleinern bzw. den Durchlaßquerschnitt eines im Stand der Technik vorgesehenen herkömmlichen Einlaßventiles auf zwei kleinere Querschnitte aufzuteilen. Dabei ist dann nicht nur daran gedacht, die beiden Querschnitte parallel zueinander zu betreiben, wie dies beispielsweise für Notbremsungen sinnvoll ist, sondern der überwiegenden Anzahl von Bremsungen im Teilbremsbereich dadurch Rechnung zu tragen, daß nach irgendeiner Steuerphilosophie die beiden Einlaßventile, z. B. alternierend, angesteuert werden. Durch die Verwirklichung vergleichsweise kleinerer Querschnitte an den Magnetventilen steigt in Verbindung mit einer entsprechenden Steuerelektronik die Feinfühligkeit der Aussteuerung des Druckes, beispielsweise des Bremsdruckes. Die bewegten Massen an den Magnetventilen werden kleiner, wodurch wiederum ein schnelleres Ansprechen resultiert. Auch der Verschleiß an den Magnetventilen ist bei verkleinerter Bauart verringert. Die Ventilsitze werden vergleichsweise langsamer verschleißen, also insgesamt eine erhöhte Lebensdauer zulassen. Bei der erfindungsgemäßen Anordnung ergibt sich weiterhin ein überraschender Sicherheitsaspekt. Wenn beispielsweise ein in nicht erregter Stellung offenes Einlaßmagnetventil in der erregten Stellung hängenbleibt, bleibt die Zuleitung von Druckluft über dieses Magnetventil verschlossen, während über das zweite Einlaßmagnetventil - dessen ordnungsgemäße Funktion vorausgesetzt-wenigstens eine Belüftung und damit eine Aussteuerung des Bremsdruckes auch in diesem Defektfalle noch möglich ist. Die Belüftung wird dann bei Teilbremsungen durchaus erwartungsgemäß erfolgen. Bei Notbremsungen geschieht die Belüftung zwar etwas verzögert, aber dennoch unter Erreichung einer Bremswirkung. Die Verdopplung oder Verdreifachung der Magnetventile ermöglicht auch die Anwendung verschiedener Steuerphilosophien, um beispielsweise den Bereich der Teilbremsungen gegenüber Vollbremsungen abzugrenzen und/oder zusätzlich einen mittleren Bremsbereich festzulegen, auf den in besonderer Weise Rücksicht genommen wird. Da die Anzahl der Schaltungen pro Ventil grundsätzlich verringert wird, ergibt sich auch eine Erniedrigung des Stromverbrauches. So kann z. B. in Verbindung mit einer ABS-Steuerelektronik durch die kleineren Ventile der Fall eintreten, daß Übersteuerungen vermieden werden und auch dadurch die Schalthäufigkeit der Magnetventile reduziert wird.

Bei allen Anwendungen und Ausführungen sind die Magnetventile, deren Anzahl vermehrt ist, gleich ausgebildet. Sie sind also in identischer Bauart verwirklicht und weisen übereinstimmenden Durchlaßquerschnitt auf. Dies kann auch im Verhältnis der Einlaßventile zu den Auslaßventilen der Fall sein. Mit einer Verdopplung oder Vermehrung der Anzahl der Magnetventile wird der Bauraum für diese Ventile auch vorteilhaft verkleinert, so daß eine solche Ventilanordnung auf dem pneumatischen Teil eines entsprechenden Steuerventils gut unterzubringen ist.

Die Ausbildung sämtlicher Einlaßventile kann zweckmäßig so sein, daß sie stromlos offen sind, also in nicht erregtem Zustand des Magneten eine Durchgangsstellung bereitstellen. In Verbindung damit werden Auslaßventile eingesetzt, die stromlos geschlossen ausgebildet sind, bei denen also die Schließstellung durch eine mechanische Feder oder einen Druckluftvorrat eingestellt wird, wenn die Magnete der Auslaßventile nicht angesteuert werden. Damit ist zugleich der Forderung eines niedrigen Stromverbrauches Rechnung getragen, indem eine Ansteuerung nur dann erfolgt, wenn auch ein Ausgangssignal erwünscht ist. Ob nun nur die Einlaßventile, nur die Auslaßventile oder beide Ventile verdoppelt oder vermehrt werden, hängt von dem jeweiligen Anwendungsfall ab. Zur Anwendung als Anhängerbremsventil empfiehlt es sich, die Anzahl der Einlaßventile zu vermehren. Bei Ausbildung und Anordnung der Ventilanordnung zur Schaffung eines ABS-Steuerventils können die Auslaßventile in ihrer Anzahl verdoppelt werden. Für ein EBS-Steuerventil empfiehlt es sich, sowohl die Anzahl der Einlaßventile wie auch der Auslaßventile zu vergrößern. Gleiches gilt für die Anwendung der Ventilanordnung als Anhängersteuerventil.

Es kann eine Steuerelektronik vorgesehen sein, die bei Teilbremsung verdoppelte Magnetventile alternierend ansteuert. Dies kann sowohl für die Einlaßventile wie auch die Auslaßventile gelten. Die Steuerelektronik kann Bestandteil der Ventilanordnung sein, also in dem gemeinsamen Gehäuse integriert angeordnet sein. Eine andere Möglichkeit besteht in der räumlich getrennten Anordnung über entsprechende Leitungsverbindungen. Entsprechendes gilt dann auch für den Fall, daß die Anzahl verdreifacht oder weiter vermehrt ist.

In all diesen Fällen ist es zusätzlich möglich, daß eines oder mehrere der Magnetventile mit einem Anzugsstrom/-spannung erregbar und einem vergleichsweise erniedrigten Haltestrom/spannung versorgbar ausgebildet sein können. Eine entsprechende Ausgestaltung der Steuerelektronik ist hierfür Voraussetzung. Bei dieser Ausbildung wird der Stromverbrauch weiter erniedrigt.

Jedes Auslaßventil kann zweckmäßig eine Sperrstellung und eine Durchlaßstellung zur Atmosphäre aufweisen.

Die Erfindung wird anhand bevorzugter Ausführungsbeispiele weiter erläutert und beschrieben. Es zeigen:
- Fig. 1: einen schematisierten Schaltplan der Ventilanordnung im Anwendungsfall als Anhängerbremsventil oder als ABS-Steuereinheit,
- Fig. 2: einen Schaltplan der Ventilanordnung als ABS-Steuereinheit für ein Zugfahrzeug,
- Fig. 3: einen Schaltplan der Ventilanordnung als Anhängerbremsventil mit ABS- und ALB-Funktion,
- Fig. 4: einen Schaltplan der Ventilanordnung für eine EBS-Steuerung,
- Fig. 5: einen Schaltplan der Ventilanordnung als Relaisventil, und
- Fig. 6: eine mehr konstruktive Verdeutlichung der Ventilanordnung in Anwendung als Anhängerbremsventil mit ALB-Funktion.

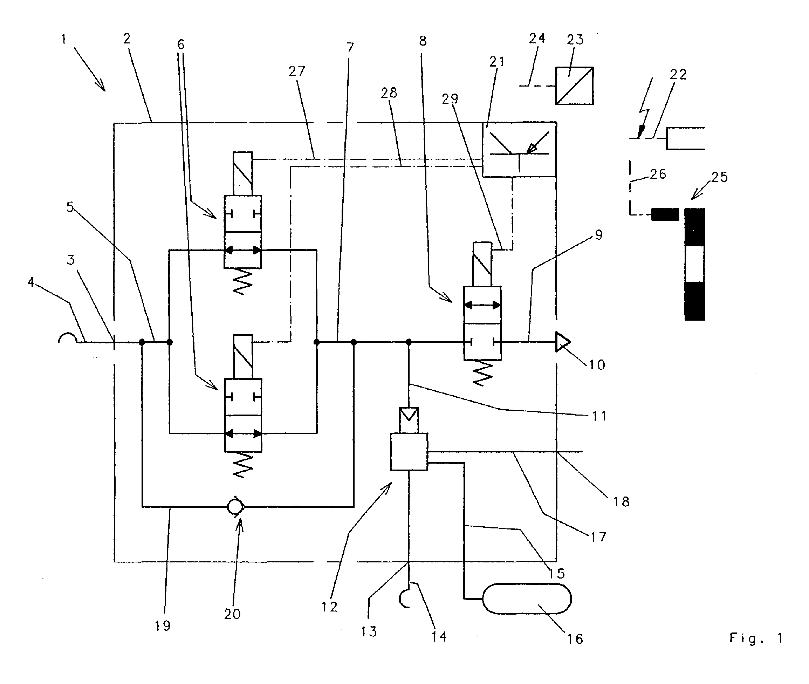

In Fig. 1 ist eine Ventilanordnung 1 dargestellt, die ein gemeinsames Gehäuse 2 aufweist, welches durch eine Umfassungslinie verdeutlicht ist. Am Gehäuse 2 ist ein Anschluß 3 für eine zum Anhänger geführte Bremsleitung 4 vorgesehen. Von dem Anschluß 3 führt innerhalb des Gehäuses 2 eine pneumatische Leitung 5 zu zwei Einlaßventilen 6, die als Magnetventile ausgebildet sind und elektrisch ansteuerbar sind. Jedes der Magnetventile 6 weist zwei Stellungen auf, nämlich eine Durchgangsstellung, die in der nicht erregten Stellung eingenommen wird, und eine Sperrstellung, die sich in erregtem Zustand einstellt. Jedes Einlaßventil weist eine Feder auf, die in der nicht erregten Stellung dafür sorgt, daß die Durchgangsstellung eingenommen wird. Die beiden Einlaßventile 6 sind in Parallelanordnung zueinander vorgesehen. Ausgangsseitig besteht Verbindung über eine pneumatische Leitung 7 zu einem einzigen Auslaßventil 8, welches ebenfalls als elektrisch ansteuerbares Magnetventil ausgebildet ist. Auch das Auslaßventil 8 besitzt zwei Schaltstellungen. Es nimmt in nicht erregtem Zustand eine Sperrstellung ein, während es in erregtem Zustand in eine Durchgangsstellung überführt wird, bei der eine ausgangsseitig vorgesehene Leitung 9 zu einem Entlüftungsanschluß 10 führt. Von der Leitung 7 zweigt eine Leitung 11 ab, über die ein Relaisventil 12 pneumatisch ansteuerbar ist. Das Relaisventil 12 wird über einen Anschluß 13 von einer Vorratsleitung 14 mit Druckluft versorgt. Von dem Relaisventil 12 führt eine Leitung 15 zu einem Druckluftvorratsbehälter 16 auf dem Anhänger. Eine Bremsleitung 17 führt zu einem Anschluß 18 und von dort weiter zu einem oder mehreren nicht dargestellten Bremszylindern des Anhängers. Die Leitung 7 ist mit der Leitung 5 über eine die Einlaßventile 6 überbrückende Umgehungsleitung 19 verbunden, in der ein Rückschlagventil 20 in der dargestellten Weise eingeschaltet ist, um eine Entlüftungsmöglichkeit für die Leitung 7 zu schaffen, wenn der Druck in der Bremsleitung 4 erniedrigt wird.

Weiterhin ist eine Steuerelektronik 21 vorgesehen, die, wie dargestellt, auch in dem gemeinsamen Gehäuse 2 angeordnet sein kann. Die Steuerelektronik 21 wird über eine elektrische Leitung 22 mit Strom bzw. Spannung versorgt. Weiterhin ist zweckmäßig ein Sensor 23, z. B. in Form eines ALB-Druck/Spannungs-Wandlers vorgesehen, dessen Signalleitung 24 zu der Steuerelektronik 21 herangeführt ist. Weiterhin ist im Rahmen einer ABS-Steuerung ein Radsensor 25 vorgesehen, dessen Signalleitung 26 ebenfalls zu der Steuerelektronik 21 führt. Von der Steuerelektronik 21 führen entsprechende elektrische Steuerleitungen 27, 28, 29 zu den beiden Einlaßventilen 6 und dem Auslaßventil 8.

Die Ventilanordnung 1 nach Fig. 1 ist als Anhängerbremsventil oder als ABS-Steuerventil ausgebildet und angepaßt. Es ist hier gegenüber dem Stand der Technik die Anzahl der Einlaßventile 6 verdoppelt. Die Einlaßventile 6 sind in Parallelanordnung vorgesehen bzw. angeordnet. Die Einlaßventile 6 können identische Ausbildung bzw. Gestaltung besitzen. Die Steuerelektronik 21 ist so ausgebildet, daß z. B. bei Teilbremsungen die beiden Einlaßventile 6 alternierend angesteuert werden, so daß der vergleichsweise kleine Durchlaßquerschnitt eines solchen Einlaßventiles 6 für diesen Betriebsfall in besonderer Weise angepaßt ist. Bei Not- oder Gewaltbremsungen werden beide Einlaßventile 6 gemeinsam über die Steuerelektronik gesteuert. Die Steuerung des Auslaßventils 8 geschieht wie im Stand der Technik.

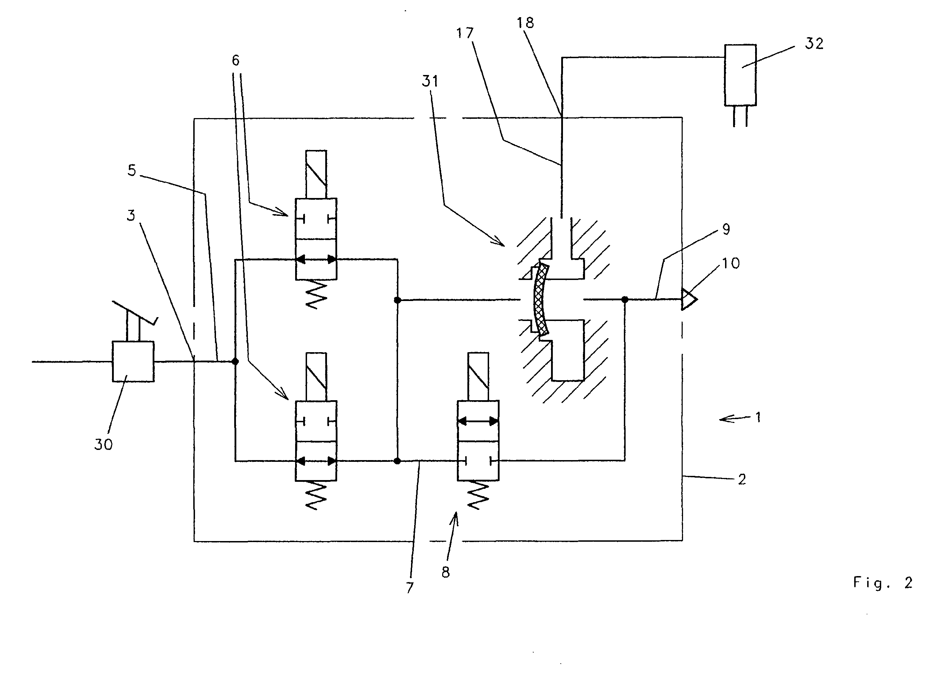

Fig. 2 zeigt eine Ventilanordnung 1, wie sie auf einem Zugfahrzeug in Verbindung mit einer ABS-Steuerung Anwendung findet. Am Anschluß 3 des Gehäuses 2 ist ein Bremsdruckgeber, beispielsweise ein Bremsventil 30, angeschlossen. Anstelle eines Relaisventils 12 (Fig. 1) ist ein Schnellöseventil 31 vorgesehen, welches in an sich bekannter Weise ausgebildet ist. Mit dem Anschluß 18 ist ein Bremszylinder 32 verbunden. Die übrigen Elemente sind in entsprechender Weise vorhanden, teilweise nicht dargestellt. Auch bei dieser Ventilanordnung 1 ist die Anzahl der Einlaßventile 6 verdoppelt, und zwar in Verbindung mit einem einzigen Auslaßventil 8.

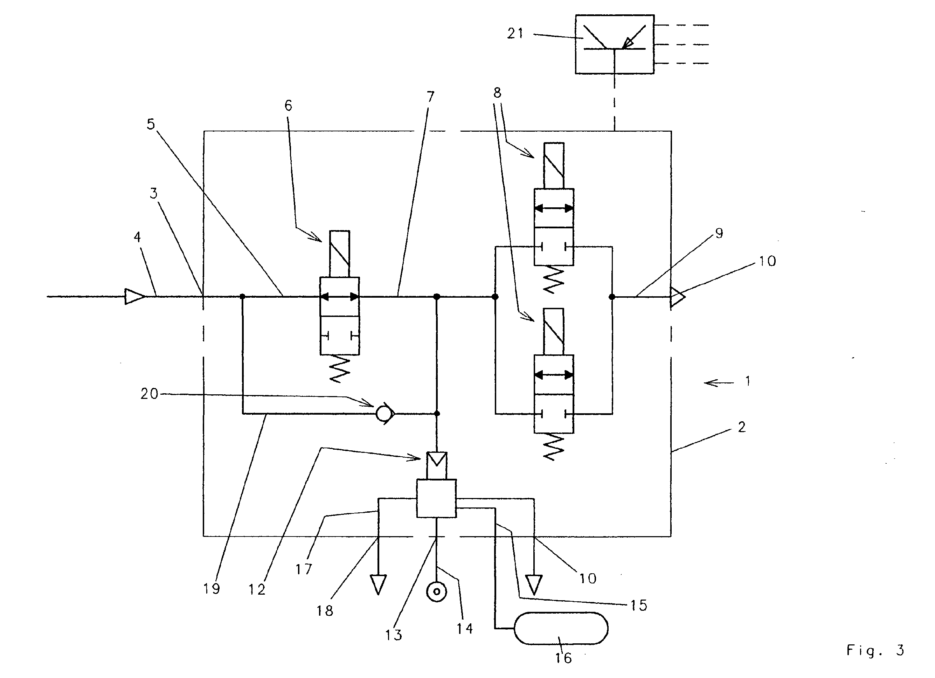

Fig. 3 zeigt eine Ventilanordnung 1 mit einem gemeinsamen Gehäuse 2, bei dem die Steuerelektronik 21 außerhalb des gemeinsamen Gehäuses 2 vorgesehen ist. Es ist hier eine Anwendung auf ein Anhängerbremsventil verdeutlicht, an welchem eine ABS- und eine ALB-Funktion verwirklicht sein können. Es ist hier nur ein Einlaßventil 6, jedoch zwei Auslaßventile 8 vorgesehen. Die Auslaßventile 8 sind wiederum in Parallelanordnung zueinander vorgesehen. Die Wirkungsweise ist aus den vorangehenden Ausführungen erkennbar.

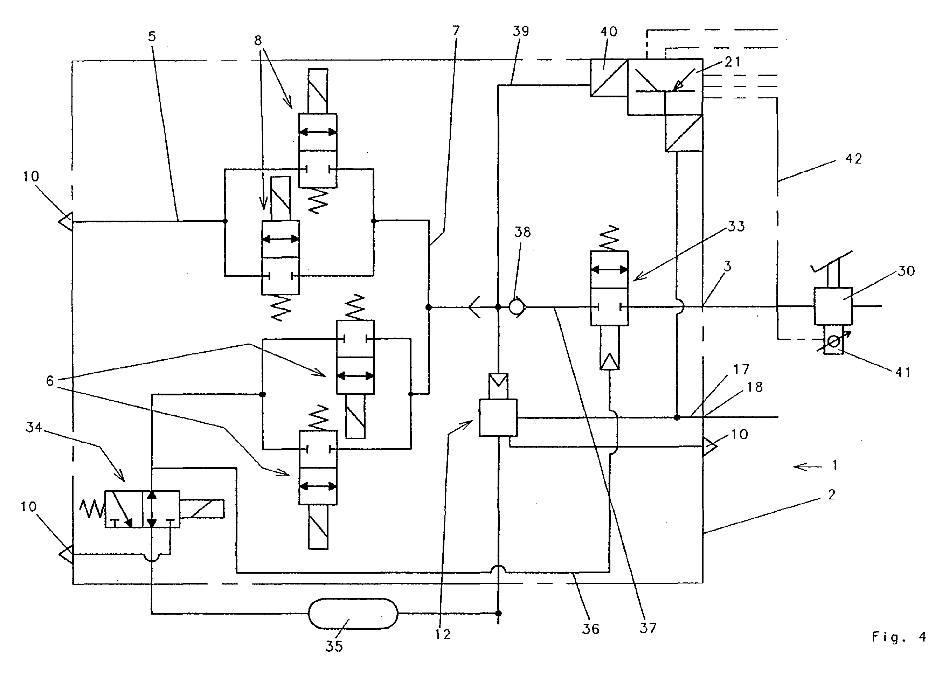

Fig. 4 zeigt eine Ausbildung der Ventilanordnung, wie sie typischerweise im Rahmen einer EBS-Anlage Anwendung findet. Hier sind zwei Einlaßventile 6 in Parallelanordnung zueinander vorgesehen. Weiterhin sind zwei Auslaßventile 8, ebenfalls in Parallelanordnung zueinander, vorgesehen. Die Einlaßventile 6 sind so ausgebildet und angeordnet, daß sie in stromlosem Zustand ihre Sperrstellung einnehmen. Gleiches gilt für die Ausbildung und Anordnung der Auslaßventile 8. Von dem Bremsventil 30 führt eine Steuerleitung zu dem Anschluß 3 und weiter zu einem Umschaltventil 33, welches pneumatisch ansteuerbar ausgebildet ist und in der nicht angesteuerten Stellung den Durchgang absperrt. Weiterhin ist ein zweites Umschaltventil 34 im Gehäuse 2 vorgesehen, welches elektrisch ansteuerbar ist und über die Steuerelektronik 21 angesteuert wird. Das Umschaltventil 34 steht während des Fahrbetriebes ständig unter Strom und sichert damit die Durchgangsstellung, so daß Vorratsluft aus einem Vorratsbehälter 35 an den beiden Einlaßventilen 6 ansteht. Erst bei Ausfall der Stromversorgung oder einem entsprechenden Defekt schaltet das Umschaltventil 34 in die Entlüftungsstellung um, so daß dann eine rein pneumatisch wirkende Rückfallebene zum Zug kommt. Auch hier ist den beiden Einlaßventilen und den beiden Auslaßventilen 8 ein Relaisventil 12 nachgeschaltet, welches ebenfalls aus dem Vorratsbehälter 35 mit Vorratsluft versorgt wird. Die zu den Einlaßventilen 6 führende Ausgangsleitung des Umschaltventiles 34 ist über eine pneumatische Leitung 36 mit dem Umschaltventil 33 verbunden. Von dem Umschaltventil 33 führt eine pneumatische Leitung 37, in der ein Rückschlagventil 38 angeordnet ist, zu dem Relaisventil 12. An die Leitung 7 bzw. die Leitung 37 ist über eine Leitung 39 ein Drucksensor 40 angeschlossen, der als Druck/Spannungs-Wandler ausgebildet sein kann und dessen Signal zu der Steuerelektronik 21 geleitet ist. Auch hier werden, obwohl dies nicht dargestellt ist, die beiden Einlaßventile 6 und die beiden Auslaßventile 8 sowie das Umschaltventil 34 elektrisch über die Steuerelektronik 21 gesteuert bzw. geschaltet. Das Bremsventil 30 besitzt hier einen elektrischen Teil in Form eines Sensors 41, dessen elektrische Signalleitung 42 ebenfalls zu der Steuerelektronik 21 geführt ist. Im Rahmen einer EBS-Anlage kann bei dieser Ventilanordnung 1 eine entsprechende Steuerphilosophie verwirklicht werden, die auch auf Teilbremsungen bzw. Vollbremsungen Rücksicht nimmt und bei der die Anzahl der Schaltungen der Magnetventile 6, 8 gering gehalten wird.

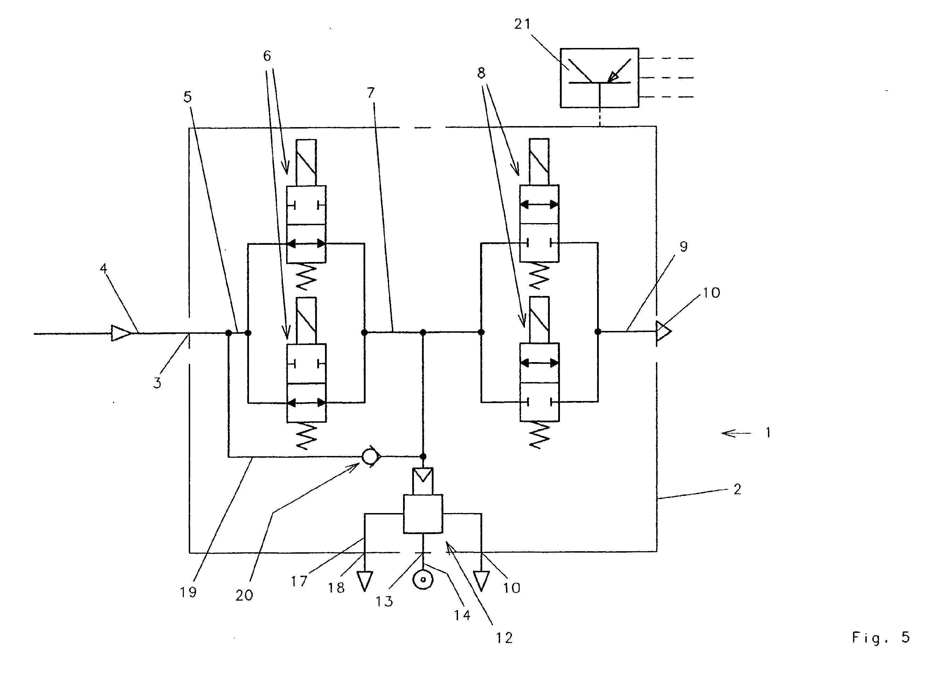

Fig. 5 zeigt eine Ausführungsform der Ventilanordnung 1 als Relaisventil, wobei hier in dem gemeinsamen Gehäuse 2 zwei Einlaßventile 6 in Parallelanordnung zueinander vorgesehen sind. Gleichzeitig sind auch zwei Auslaßventile 8 vorgesehen, ebenfalls in Parallelanordnung zueinander. Ansonsten entspricht die Ausbildung in etwa der Ventilanordnung gemäß Fig. 1.

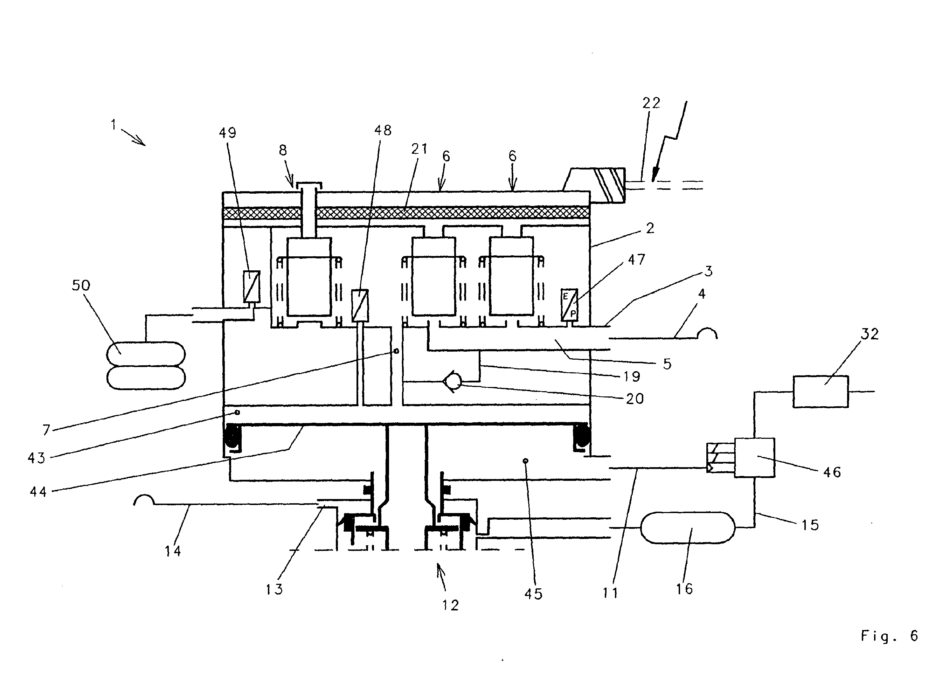

Fig. 6 zeigt eine mehr konstruktive Ausführungsform einer Ventilanordnung 1 als Anhängerbremsventil mit ALB-Funktion. In dem gemeinsamen Gehäuse 2 sind zwei Einlaßventile 6 in Parallelanordnung zueinander vorgesehen. Den beiden Einlaßventilen 6 ist ein Auslaßventil 8 mit eigener Entlüftung zugeordnet. Die Bremsleitung 4 führt über den Anschluß 3 zu den Sitzen der beiden Einlaßventile 6, die über die Steuerelektronik 21 geschaltet werden und in stromlosem Zustand offen sind. Die Leitung 7 führt in eine Steuerkammer 43, die über einen Steuerkolben 44 von einer Bremskammer 45 getrennt ist, von der die Leitung 11 zu einem weiteren nachgeschalteten Relaisventil 46 führt. Im unteren Bereich des Gehäuses 2 ist das Relaisventil 12 verwirklicht, über welches auch Vorratsluft in den Vorratsbehälter 16 gelangt. Innerhalb des gemeinsamen Gehäuses 2 sind weiterhin drei Druck/Spannungs-Wandler 47, 48, 49 vorgesehen, die als Sensoren fungieren und deren Signale ebenfalls zu der Steuerelektronik 21 geführt sind. Der Druck/Spannungs-Wandler 47 überwacht den Druck in der Bremsleitung 4. Der Druck/Spannungs-Wandler 48 überwacht den Druck in der Steuerkammer 43. Er könnte auch an die Bremskammer 45 angeschlossen sein. Der Druck/Spannungs-Wandler 49 schließlich ermittelt den Druck in den Luftfederbälgen 50 und erbringt somit ein ALB-Signal an die Steuerelektronik 21. Auch bei dieser Ausführungsform können die beiden Einlaßventile 6 alternierend geschaltet werden, sei es, daß bei einer ersten Teilbremsung das eine Einlaßventil 6 beginnt und beim nächsten Takt das andere Einlaßventil 6 öffnet usw.. Bei einer nachfolgenden Teilbremsung wird dann die umgekehrte Reihenfolge angewendet. Es ist auch möglich, bei der ersten Teilbremsung nur das eine Einlaßventil 6 zu betätigen und bei der nachfolgenden Teilbremsung das andere Einlaßventil 6. Bei einer Vollbremsung werden beide Einlaßventile 6 gemeinsam über die Steuerelektronik 21 angesteuert.

### BEZUGSZEICHENLISTE

- 1 -: Ventilanordnung
- 2 -: Gehäuse
- 3 -: Anschluß
- 4 -: Bremsleitung
- 5 -: Leitung
- 6 -: Einlaßventil
- 7 -: Leitung
- 8 -: Auslaßventil
- 9 -: Leitung
- 10 -: Entlüftungsanschluß

- 11 -: Leitung
- 12 -: Relaisventil
- 13 -: Anschluß
- 14 -: Vorratsleitung
- 15 -: Leitung
- 16 -: Druckluftvorratsbehälter
- 17 -: Bremsleitung
- 18 -: Anschluß
- 19 -: Umgehungsleitung
- 20 -: Rückschlagventil

- 21 -: Steuerelektronik
- 22 -: Leitung
- 23 -: Sensor
- 24 -: Signalleitung
- 25 -: Radsensor
- 26 -: Signalleitung
- 27 -: Steuerleitung
- 28 -: Steuerleitung
- 29 -: Steuerleitung
- 30 -: Bremsventil

- 31 -: Schnellöseventil
- 32 -: Bremszylinder
- 33 -: Umschaltventil 1
- 34 -: Umschaltventil
- 35 -: Vorratsbehälter
- 36 -: Leitung
- 37 -: Leitung
- 38 -: Rückschlagventil
- 39 -: Leitung
- 40 -: Drucksensor

- 41 -: Sensor
- 42 -: Signalleitung
- 43 -: Steuerkammer
- 44 -: Steuerkolben
- 45 -: Bremskammer
- 46 -: Relaisventil
- 47 -: Druck/Spannungs-Wandler
- 48 -: Druck/Spannungs-Wandler
- 49 -: Druck/Spannungs-Wandler
- 50 -: Luftfederbalg

## Patentansprüche

1. Ventilanordnung (1) für Druckluftbremsanlagen, mit einem Gehäuse (2), an dem ein Anschluß (3) für die Zuleitung von Druckluft in Form eines Signals oder eines Vorrats und ein Anschluß für eine zu einem Verbraucher führende Leitung vorgesehen sind, wobei in oder an dem Gehäuse (2) ein elektrisch ansteuerbares Magnetventil als Einlaßventil (6) und ein elektrisch ansteuerbares Magnetventil als Auslaßventil (8) vorgesehen sind, **dadurch gekennzeichnet, daß** in oder an dem Gehäuse (2) zumindest ein weiteres, gleiches elektrisch ansteuerbares Magnetventil als Einlaßventil (6) und/oder zumindest ein weiteres, gleiches elektrisch ansteuerbares Magnetventil als Auslaßventil (8) vorgesehen sind, daß die Magnetventile jeweils parallel zueinander angeordnet sind, und daß mehrfach angeordnete gleiche Magnetventile (6 bzw. 8) je nach Steuerphilosophie wahlweise einzeln bzw. für große Durchflußmengen gemeinsam steuerbar sind.

2. Ventilanordnung nach Anspruch 1, **dadurch gekennzeichnet, daß** sämtliche Einlaßventile (6) stromlos offen und sämtliche Auslaßventile (8) stromlos geschlossen ausgebildet sind.

3. Ventilanordnung nach Anspruch 2, **dadurch gekennzeichnet, daß** zur Anwendung als Anhängerbremsventil mehrere Einlaßventile (6) vorgesehen sind.

4. Ventilanordnung nach Anspruch 2, **dadurch gekennzeichnet, daß** zur Anwendung als ABS-Steuerventil mehrere Auslaßventile (8) vorgesehen sind.

5. Ventilanordnung nach Anspruch 2, **dadurch gekennzeichnet, daß** zur Anwendung als EBS-Steuerventil mehrere Einlaßventile (6) und mehrere Auslaßventile (8) vorgesehen sind.

6. Ventilanordnung nach einem oder mehreren der Ansprüche 1 bis 5, **dadurch gekennzeichnet, daß** eine Steuerelektronik (21) vorgesehen ist, die bei Teilbremsungen verdoppelte Magnetventile (6 bzw. 8) alternierend ansteuert.

7. Ventilanordnung nach einem oder mehreren der Ansprüche 1 bis 6, **dadurch gekennzeichnet, daß** eines oder mehrere der Magnetventile mit einem Anzugsstrom/-spannung erregbar und einem vergleichsweise erniedrigten Haltestrom/-spannung versorgbar ausgebildet sind.

8. Ventilanordnung nach Anspruch 1, **dadurch gekennzeichnet, daß** jedes Auslaßventil (8) eine Sperrstellung und eine Durchlaßstellung zur Atmosphäre aufweist.
